# FASCICULE DE BREVET EUROPEEN

(11) **EP 2 531 382 B1**
(45) Date de publication et mention de la délivrance du brevet: **26.03.2014**
(21) Numéro de dépôt: 11706864.3
(22) Date de dépôt: 24.01.2011
(51) Int. Cl.: B60R 21/34

(54) **ENSEMBLE COMPRENANT UN CAPOT ACTIF DE PROTECTION A L'EGARD DES CHOCS PIETON ET VEHICULE EQUIPE D'UN TEL ENSEMBLE**
EINHEIT MIT EINER AKTIVEN MOTORHAUBE FÜR DEN FUSSGÄNGERSCHUTZ UND DAMIT AUSGERÜSTETES FAHRZEUG
UNIT COMPRISING A PEDESTRIAN PROTECTING ACTIVE BONNET AND VEHICLE WITH THIS UNIT

(30) Priorité: 01.02.2010 FR 1050657
(43) Date de publication de la demande: 12.12.2012
(73) Titulaire: Peugeot Citroën Automobiles SA, 78140 Vélizy Villacoublay (FR)
(72) Inventeur: JEANNEAU, Clément, F-92100 Boulogne Billancourt (FR)
(74) Mandataire: Fernandez, Francis Lionel
(86) Numéro de dépôt international: PCT/FR2011/050129
(87) Numéro de publication internationale: WO 2011/092422

(56) Documents cités:
- EP-A1- 1 714 837
- EP-B1- 1 153 810
- DE-A1- 10 152 621
- DE-A1- 10 204 594

## Description

La présente invention concerne un ensemble comprenant un capot du type actif pour véhicule automobile, des moyens pour détecter le choc d'un piéton contre l'avant du véhicule et actionner des moyens pour soulever le capot afin d'amortir le choc du piéton sur ce capot.

Un tel ensemble a été décrit par exemple dans le brevet DE 10204594 ou DE 10152621.

Dans les véhicules automobiles actuels le compartiment moteur est fortement encombré par des constituants rigides, tels que le groupe motopropulseur, le radiateur, etc... et il existe une distance faible entre ceux-ci et le capot.

En cas de choc d'un piéton contre le pare-choc avant du véhicule, ce piéton est projeté vers le capot.

Le fémur des jambes du piéton heurte la partie avant du capot et la tête du piéton heurte une zone située entre le milieu et l'arrière du capot.

Le capot est réalisé en un matériau qui est susceptible d'amortir le choc du piéton.

Cependant, compte tenu de la faible distance existant entre le capot et les constituants rigides évoqués plus haut, en se déformant lors du choc du piéton, le capot prend immédiatement appui sur les constituants rigides, de sorte qu'il est incapable d'amortir le choc du piéton et d'éviter que celui-ci soit blessé.

Le fait que le capot puisse se soulever après détection du choc d'un piéton permet d'augmenter la distance comprise entre le capot et les constituants rigides, ce qui lui permet de se déformer lors du choc du piéton et d'amortir ce choc.

Cependant, dans le cas de piétons adultes ou dont la taille est supérieure à 1,50 m, la tête de ceux-ci risque de heurter la partie inférieure du pare-brise qui est adjacente à la planche de bord du véhicule.

Cette partie du pare-brise est rigide et n'est pas capable d'amortir le choc.

Dans ce cas, le soulèvement du capot provoqué après la détection du choc du piéton ne permet pas d'amortir le choc de la tête de celui-ci contre la partie inférieure du pare-brise.

Le but de la présente invention est de remédier à cet inconvénient.

Ce but est atteint, selon l'invention, grâce à un ensemble selon la revendication 1.

Le soulèvement de la partie avant du capot ayant lieu lors de la première phase permet d'amortir le choc du fémur des jambes d'un piéton.

Le soulèvement de la partie arrière du capot ayant lieu lors de la seconde phase permet d'amortir le choc de la tâte d'un piéton ayant une taille inférieure ou égale à 1,50 m environ.

Le déplacement du capot en position soulevée vers l'arrière c'est-à-dire vers le pare-brise permet à l'arrière du capot d'amortir le choc de la tête d'un piéton ayant une taille supérieure à 1,50 m.

Ces vérins sont de préférence des vérins pyrotechniques.

De tels vérins présentent l'avantage de pouvoir déplacer très rapidement le capot vers sa position active, après la détection du choc.

Dans une version particulièrement avantageuse de l'invention, lesdits vérins sont actionnés par la détente d'un ressort.

La détente de ce ressort qui est provoquée par les moyens pyrotechniques non seulement déplace très rapidement le capot vers la position active, mais crée entre celui-ci et la caisse du véhicule une liaison élastique qui augmente l'aptitude du capot à amortir les chocs d'un piéton.

De préférence également, chacun des deux vérins sont reliés entre eux par un élément rigide destiné à être fixé à la caisse du véhicule, pour répartir les efforts exercés par le capot en cas de choc d'un piéton.

Selon un autre aspect, l'invention concerne également un véhicule automobile équipé d'un ensemble selon l'invention présentant les caractéristiques précitées.

D'autres particularités et avantages de l'invention apparaîtront encore tout au long de la description ci-après.

Aux dessins annexés, donnés à titre d'exemples, non limitatifs :
- la figure 1 est une vue schématique en coupe longitudinale d'un véhicule automobile équipé d'un ensemble selon l'invention, le capot étant en position inactive,
- la figure 2 est une vue analogue à la figure 1, le capot étant en position active,
- la figure 3 est une vue de dessus du véhicule représenté sur les figures 1 et 2, le capot étant enlevé,
- la figure 4 est une vue schématique en coupe de l'un des vérins de l'ensemble selon l'invention, ce vérin étant en position inactive.

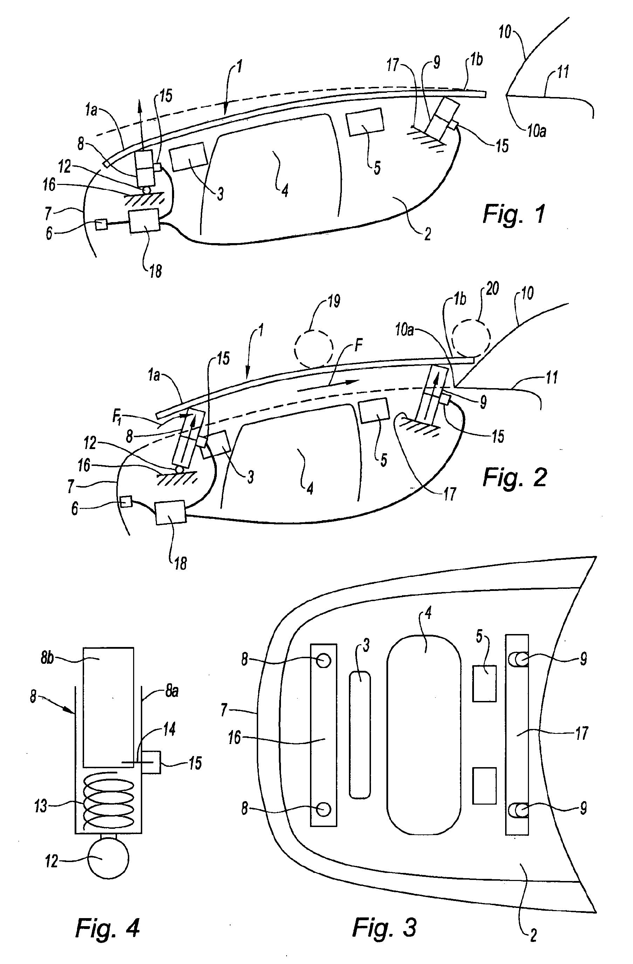

Le véhicule représenté schématiquement sur les figures 1 à 3 comprend un capot 1 qui est destiné à recouvrir un compartiment moteur 2 comportant des constituants rigides 3, 4, 5 dont la partie supérieure est située très près du capot 1.

Le capot 1 est du type actif et fait partie d'un ensemble comprenant des moyens 6 pour détecter le choc d'un piéton contre le pare-choc avant 7 du véhicule et actionner des moyens tels que des vérins 8, 9 adaptés pour soulever le capot 1 afin que celui-ci puisse amortir le choc d'un piéton sur ce capot 1. Conformément à l'invention :
- les vérins 8 situés à l'avant sont adaptés pour soulever, dans une première phase, la partie avant 1a du capot 1, comme montré en pointillés sur la figure 1, et
- les vérins 9 situés à l'arrière sont adaptés pour soulever, dans une seconde phase, la partie arrière 1 b du capot 1 et déplacer l'ensemble du capot, comme montré par la flèche F de la figure 2, vers l'arrière c'est-à-dire vers le pare-brise 10 du véhicule.

Le soulèvement de la partie arrière 1 b du capot 1 et le déplacement de celui-ci vers l'arrière sont réalisés simultanément.

Les vérins 8, 9 sont de préférence des vérins pyrotechniques dont l'extension est déclenchée par la combustion d'une composition pyrotechnique.

Les deux vérins 8 situés à l'avant et les deux vérins 9 situés à l'arrière sont, comme montré par la figure 3, disposés symétriquement par rapport à l'axe longitudinal du véhicule et sous le capot 1 (non représenté sur la figure 3).

Les deux vérins 9 situés sous la partie arrière 1 b du capot 1 sont inclinés vers l'arrière de façon qu'ils puissent, lors de la seconde phase illustrée par la figure 2, soulever la partie arrière 1 b du capot 1 et en même temps déplacer vers l'arrière l'ensemble du capot 1.

Dans la position finale du capot 1 le bord arrière de celui-ci touche pratiquement le pare-brise 10 et est éloigné du bord inférieur 10a de ce pare-brise et de la planche de bord 11.

Les deux vérins 8 situés à l'avant sont reliés à la caisse du véhicule par une articulation 12 telle qu'une rotule de façon à pouvoir pivoter vers l'arrière (voir flèche F1 sur la figure 2) lors du déplacement du capot 1 vers l'arrière qui est commandé par les deux vérins 9 situés sous la partie arrière 1 b du capot 1.

La liaison entre l'extrémité des vérins 8, 9 et le capot 1 est réalisée de telle sorte que cette extrémité puisse pivoter par rapport au capot 1 et que ce capot 1 puisse s'ouvrir normalement à partir de la position inactive représentée sur la figure 1.

Comme montré par la figure 3, les deux vérins avant 8 et les deux vérins arrière 9 sont reliés entre eux par un élément rigide 16, 17 qui est fixé à la caisse du véhicule.

Ces éléments rigides 16, 17 permettent de répartir les efforts exercés sur le capot 1 en cas de choc d'un piéton.

Dans l'exemple de la figure 4, chaque vérin 8 ou 9 est constitué de deux éléments 8a, 8b engagés coulissants l'un dans l'autre.

Un ressort 13 est comprimé entre les deux éléments 8a, 8b, ceux-ci étant verrouillé en position inactive par un organe 14.

L'extension de l'élément 8b est déclenchée par la détente du ressort 13 après rupture de l'organe de verrouillage 14.

Cette rupture est provoquée par l'amorçage des moyens pyrotechniques 15. L'ensemble que l'on vient de décrire fonctionne de la façon suivante.

Lors d'un choc frontal avec un piéton, le pare-choc 7 du véhicule heurte les jambes du piéton et le détecteur 6 (voir figure 1) envoie un signal à un calculateur 18 qui selon la vitesse du véhicule ou autre paramètre envoie un signal aux moyens pyrotechniques 15 pour commander dans une première phase l'extension des vérins avant 8.

La partie avant 1 a du capot 1 se soulève, comme montré en pointillés sur la figure 1.

Ce soulèvement de la partie avant 1 a du capot amortit le choc sur des fémurs du piéton.

Cet amortissement est dû à la déformation de la partie avant 1 a du capot et à la liaison élastique existant entre le capot et le véhicule, obtenue grâce aux ressorts 13 des vérins avant 8 qui sont à l'état détendu.

Dans une seconde phase, le calculateur 18 envoie un signal aux moyens pyrotechniques 15 des vérins arrière 9 pour provoquer le déverrouillage et la détente de leur ressort 13.

La partie arrière 1 b du capot 1 est alors soulevée et l'ensemble du capot 1 se déplace vers le pare-brise 10, comme montré par la figure 2.

Pendant cette seconde phase, le piéton poursuit sa chute vers le capot 1 et sa tête heurte le capot.

Dans le cas d'un enfant ou d'une personne dont la taille est inférieure à 1,50 m environ, la tête 19 (voir figure 2) heurte la zone centrale du capot 1 et le choc est amorti par la déformation du capot 1 et l'élasticité des ressorts 13 des vérins 8, 9.

Dans le cas d'un piéton ayant une taille supérieure à 1,50 m, la tête 20 (voir figure 2) de celui-ci peut heurter l'arrière du capot 1 et une zone du pare-brise 10 située au-dessus du bord inférieur 1 a de ce pare-brise 10 c'est-à-dire éloignée de la zone rigide de celui-ci.

Dans ce cas, le choc de la tête 20 du piéton sera amorti d'une part par le capot 1 et d'autre part par la flexibilité de la zone d'impact de la tête du piéton sur le pare-brise.

## Revendications

1. Ensemble comprenant un capot (1) du type actif pour véhicule automobile, des moyens (6) pour détecter le choc d'un piéton contre l'avant du véhicule et actionner des moyens (8, 9) pour soulever le capot (1) afin d'amortir le choc du piéton sur ce capot, lesdits moyens pour soulever le capot comprennent :
- des premiers moyens (8) comprenant deux vérins destinés à être fixés symétriquement par rapport à l'axe longitudinal du véhicule, sous la partie avant (1 a) du capot (1) et adaptés pour soulever, dans une première phase, ladite partie avant (1 a) du capot (1) et,
- des seconds moyens (9) comprenant deux vérins destinés à être fixés symétriquement par rapport audit axe longitudinal, sous la partie arrière (1 b) du capot (1) et adaptés pour soulever, dans une seconde phase, ladite partie arrière (1 b) du capot (1), lesdits vérins des seconds moyens (9) étant positionnés de manière inclinée pour permettre le déplacement, en même temps, de l'ensemble du capot (1) vers l'arrière, en direction du pare-brise (10) du véhicule,
**caractérisé en ce que** les deux vérins des premiers moyens (8) sont destinés à être articulés par rapport à la caisse du véhicule, de façon à pouvoir pivoter vers l'arrière lors du déplacement du capot (1) vers l'arrière, ledit pivotement étant commandé par les deux vérins des seconds moyens (9).

2. Ensemble selon la revendication 1, **caractérisé en ce que** lesdits vérins (8, 9) sont des vérins pyrotechniques.

3. Ensemble selon la revendication 1, **caractérisé en ce que** lesdits vérins (8, 9) sont actionnés par la détente d'un ressort (13).

4. Ensemble selon l'une quelconque des revendications précédente, **caractérisé en ce que** chacun des deux vérins (8, 9) sont reliés entre eux par un élément rigide (16, 17) destiné à être fixé à la caisse du véhicule.

5. Véhicule automobile équipé d'un ensemble selon l'une des revendications précédentes.

## Patentansprüche

1. Einheit, die eine Motorhaube (1) des aktiven Typs für Kraftfahrzeug, Mittel (6) zum Erfassen des Aufpralls eines Fußgängers gegen die Vorderseite des Fahrzeugs und zum Betätigen der Mittel (8, 9) zum Heben der Motorhaube (1) aufweist, um den Aufprall des Fußgängers auf dieser Motorhaube zu dämpfen, aufweist, wobei die Mittel zum Heben der Motorhaube Folgendes aufweisen:
- erste Mittel (8), die zwei Zylinder aufweisen, die dazu bestimmt sind, symmetrisch in Bezug auf die Längsachse des Fahrzeugs unter dem Vorderteil (1a) der Motorhaube (1) befestigt zu sein, und angepasst sind, um in einer ersten Phase den Vorderteil (1a) der Motorhaube (1) zu heben, und
- zweite Mittel (9), die zwei Zylinder aufweisen, die dazu bestimmt sind, symmetrisch in Bezug auf die Längsachse unter dem hinteren Teil (1b) der Motorhaube (1) befestigt zu sein, und die angepasst sind, um in einer zweiten Phase den Hinterteil (1b) der Motorhaube (1) zu heben, wobei die Zylinder der zweiten Mittel (9) schräg positioniert sind, um die gleichzeitige Verlagerung der Einheit der Motorhaube (1) nach hinten in Richtung der Windschutzscheibe (10) des Fahrzeugs zu erlauben,
**dadurch gekennzeichnet, dass** die zwei Zylinder der ersten Mittel (8) dazu bestimmt sind, in Bezug auf die Karosserie des Fahrzeugs derart angelenkt zu sein, dass sie bei der Verlagerung der Motorhaube (1) nach hinten schwenken können, wobei das Schwenken von den zwei Zylindern der zweiten Mittel (9) gesteuert wird.

2. Einheit nach Anspruch 1, **dadurch gekennzeichnet, dass** die Zylinder (8, 9) pyrotechnische Zylinder sind.

3. Einheit nach Anspruch 1, **dadurch gekennzeichnet, dass** die Zylinder (8, 9) durch das Entspannen einer Feder (13) betätigt werden.

4. Einheit nach einem der vorhergehenden Ansprüche, **dadurch gekennzeichnet, dass** die zwei Zylinder (8, 9) untereinander durch ein starres Element (16, 17) verbunden sind, das dazu bestimmt ist, an der Karosserie des Fahrzeugs befestigt zu sein.

5. Kraftfahrzeug, das mit einer Einheit nach einem der vorhergehenden Ansprüche ausgerüstet ist.

## Claims

1. An assembly comprising a bonnet (1) of the active type for a motor vehicle, means (6) to detect the impact of a pedestrian against the front of the vehicle and to actuate means (8, 9) for lifting the bonnet (1) in order to deaden the impact of the pedestrian on this bonnet, said means for lifting the bonnet comprise:
- first means (8) comprising two jacks intended to be fixed symmetrically with respect to the longitudinal axis of the vehicle, beneath the front part (1a) of the bonnet (1) and suitable for lifting, in a first phase, said front part (1a) of the bonnet (1) and,
- second means (9) comprising two jacks intended to be fixed symmetrically with respect to said longitudinal axis, beneath the rear part (1b) of the bonnet (1) and suitable for lifting, in a second phase, said rear part (1b) of the bonnet (1), said jacks of the second means (9) being positioned in an inclined manner to permit the movement, at the same time, of the entire bonnet (1) toward the rear, in the direction of the windscreen (10) of the vehicle,
**characterized in that** the two jacks of the first means (8) are intended to be articulated with respect to the body of the vehicle, so as to be able to pivot toward the rear at the time of the movement of the bonnet (1) toward the rear, said pivoting being controlled by the two jacks of the second means (9).

2. The assembly according to Claim 1, **characterized in that** said jacks (8, 9) are pyrotechnic jacks.

3. The assembly according to Claim 1, **characterized in that** said jacks (8, 9) are actuated by the release of a spring (13).

4. The assembly according to any one of the preceding claims, **characterized in that** each of the two jacks (8, 9) are connected with respect to one another by a rigid element (16, 17) intended to be fixed to the body of the vehicle.

5. A motor vehicle equipped with an assembly according to one of the preceding claims.
